(19) Europäisches Patentamt
European Patent Office
Office européen des brevets

(11) Veröffentlichungsnummer: **0 226 171 B1**

(12) **EUROPÄISCHE PATENTSCHRIFT**

(45) Veröffentlichungstag der Patentschrift: **20.05.92**

(51) Int. Cl.⁵: **C08F 283/10**, C08F 291/06, C09D 133/00, C08L 51/08

(21) Anmeldenummer: **86117167.6**

(22) Anmeldetag: **09.12.86**

(54) **Polymerisatdispersionen, Verfahren zu ihrer Herstellung, sowie deren Anwendung als Bindemittel.**

(30) Priorität: **14.12.85 DE 3544337**

(43) Veröffentlichungstag der Anmeldung:
**24.06.87 Patentblatt 87/26**

(45) Bekanntmachung des Hinweises auf die Patenterteilung:
**20.05.92 Patentblatt 92/21**

(84) Benannte Vertragsstaaten:
**AT BE CH DE ES FR GB IT LI NL SE**

(56) Entgegenhaltungen:
**EP-A- 0 005 868**
**EP-A- 0 071 070**

(73) Patentinhaber: **HOECHST AKTIENGESELLSCHAFT**
**Postfach 80 03 20**
**W-6230 Frankfurt am Main 80(DE)**

(72) Erfinder: **Engel, Dieter, Dr.**
**Rüsselsheimer Strasse 33**
**W-6092 Kelsterbach(DE)**
Erfinder: **Kraft, Kurt**
**Im Hopfengarten 16**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 226 171 B1

Rank Xerox (UK) Business Services
(3.08/2.19/2.0)

## Beschreibung

Die Erfindung betrifft wäßrige Dispersionen auf Basis von vernetzbaren Polymerisaten und $\alpha,\beta$-olefinisch ungesättigten Monomeren für die Herstellung von vernetzbaren Beschichtungen auf Oberflächen, ihre Herstellung und ihre Verwendung, insbesondere für Einbrennbeschichtungen und Lacke.

Hochreaktive Polymerisatdispersionen wie in den DE-Offenlegungsschriften 31 28 025 und 31 28 062 beschrieben, ergeben zwar witterungsbeständige Beschichtungen, insbesondere in Kombination mit reaktiven Harzen wie Melaminharzen. Sie zeigen aber z.B. bei Einsatz in Mehrschichtlackierungen nur unzureichende Haftungseigenschaften auf bzw. zwischen den einzelnen Lackschichten.

Carboxyfunktionelle selbsthärtende Polymerisate, die zusätzlich Epoxygruppen enthalten, beispielsweise hergestellt entsprechend der DE-Offenlegungsschrift 28 11 913 ergeben in Kombination mit Melaminharzen in "metallic-basecoat"-Rezepturen (nach der DE-Offenlegungsschrift 33 01 729) gut haftende Beschichtungen, die allerdings ungünstige Eigenschaften beispielsweise bezüglich der Lagerung in Wasser aufweisen. Insbesondere gilt dies für den Aufbau von Lacken unter sogenannten Reparaturbedingungen, wobei bei niedrigen Härtungstemperaturen weitere Lackschichten auf bereits lackierte Untergründe aufgebracht werden.

Grundsätzlich sind aber die genannten Polymerisate nicht ausreichend mit Verdickern rheologisch zu kontrollieren. Im Fall einer Anwendung als Bindemittel ist dies ein ganz entscheidender Nachteil, da die rheologischen Eigenschaften für die verschiedenen Einsatzgebiete gezielt eingestellt werden müssen. So sind die rheologischen Eigenschaften bei den metallic-base-coat-Lacken eine der wichtigsten Eigenschaften überhaupt, da hier die rasche Fixierung der blättchenförmigen Pigmente entscheidend für das metallische Aussehen des aufgebrachten Lackes ist.

Abmischungen von Polymerisatdispersionen, z.B. etwa der in den bereits genannten DE-Offenlegungsschriften 31 28 025 und 31 28 062 beschriebenen Polymerisatdispersionen mit den oben angeführten selbsthärtenden Polymeren ergeben bei Kombination mit reaktiven Melaminharzen in wäßrigen "metallic-base-coat"-Beschichtungen keine Verbesserung der an sich gewünschten Eigenschaftskombination von Zwischenschichthaftung und Wasserlagerstabilität. Im Gegenteil, es tritt in der Regel eine Kombination aus schlechter Zwischenschichthaftung und ungenügender Wasserlagerstabilität auf. Diese Mischung ist außerdem mit üblichen Verdickern auf Basis Polyacrylaten, Polyethylenoxid, Polyvinylalkoholen, Celluloseäthern und anderen nicht ausreichend verdickbar.

Als selbsthärtende carboxyfunktionelle Polymerisate werden solche bezeichnet, die im Molekül jeweils mindestens eine Carboxygruppe und eine Epoxigruppe enthalten, deren Carboxylgruppe(n) aber mit salzbildenden Substanzen neutralisiert ist (sind), wodurch eine vorzeitige Reaktion mit den vorhandenen Epoxigruppen verhindert wird. Sie liegen im allgemeinen als wäßrige Systeme vor.

Die Aufgabe bestand also erfindungsgemäß darin, wäßrige Bindemitteldispersionen zu entwickeln, die in wäßrigen Lacksystemen neben ausgezeichneten Haftungseigenschaften auf verschiedenen Substraten bzw. bei Mehrschichtlackaufbauten zwischen den einzelnen Schichten auch eine sehr gute Wasserlagerstabilität, insbesondere unter sogenannten Reparaturbedingungen, aufweisen und rheologisch durch Verdicker ausreichend kontrollierbar sind.

Gegenstand der Erfindung sind daher stabile wäßrige Polymerisatdispersionen auf Basis von A) 1 bis 99 Gew.- % eines carboxyfunktionellen Polymerisats, das zusätzlich Epoxygruppen enthält, B) 1 bis 99 Gew.-% eines Polymerisates aus mindestens einem $\alpha,\beta$-olefinisch ungesättigten Monomeren, wobei das Polymerisat B) in Gegenwart des Polymerisats A) hergestellt worden ist, C) 0 bis 20 Gew.-% anionischer oder nicht-ionischer Emulgatoren oder eines Gemisches von beiden oder Schutzkolloiden, wobei sich die Mengenangaben auf den Festkörperanteil der Komponenten A) bis C) beziehen, sowie gegebenenfalls weiteren üblichen Zusätzen, wobei die Summe aller Komponenten stets 100 % ist.

Die Erfindung betrifft weiterhin ein Verfahren zur Herstellung dieser Polymerisatdispersionen, dadurch gekennzeichnet, daß man in einem wäßrigen System B) 1 bis 99 Gew.-% mindestens eines $\alpha,\beta$-olefinisch ungesättigten Monomeren in Gegenwart von A) 1 bis 99 Gew.-% eines carboxyfunktionellen Polymerisats, das zusätzlich Epoxygruppen enthält und von C) 0 bis 20 Gew.-% anionischer oder nichtionischer Emulgatoren oder eines Gemisches von beiden oder Schutzkolloiden, wobei sich die Mengenangaben auf den Festkörperanteil der Komponenten A) bis C) beziehen, sowie in Gegenwart gegebenenfalls weiterer Zusätze, bei einer Temperatur zwischen 0 und 150 °C polymerisiert.

Wäßrige Systeme können dabei echte oder kolloidale Lösungen und/oder Dispersionen sein.

Es ist als überraschend anzusehen, daß es unter Einsatz beispielsweise der carboxyfunktionellen Polymerisate nach der DE-Offenlegungsschrift 28 11 913 möglich ist, wäßrige Bindemitteldispersionen herzustellen und daraus einen "metallic-base-coat"-Lack zu formulieren, der rheologisch gut kontrollierbar ist und der nach dem Auftrag eine gute Zwischenschichthaftung bei ausgezeichneter Wasserlagerstabilität aufweist.

Durch Wahl geeigneter Ausgangssubstanzen ist ein Einstellen von Polymerisateigenschaften innerhalb weiter Grenzen möglich. Beispielsweise können durch Polymerisation nicht vernetzend wirkender Vinylmonomerer in der wäßrigen Dispersion oder Lösung eines unvernetzten selbsthärtenden carboxyfunktionellen Polymeren wasserlösliche bzw. in Wasser dispergierfähige Polymerisate hergestellt werden. Dabei können beispielsweise die hydrophilen oder auch die hydrophoben Eigenschaften und die Härte bzw. die Flexibilität durch geeignete Wahl der Komponenten A) und B) gezielt eingestellt werden. Weiterhin können durch den Einbau reaktiver Vinylmonomerer zunächst in Wasser dispergierfähige Polymerisate hergestellt werden, die dann bevorzugt nach dem Aufbringen auf ein Substrat über eine entsprechende Nachbehandlung in den vernetzten Zustand überführt werden.

Geeignete Polymere der Komponente A) sind solche, wie sie beispielsweise in den DE-Offenlegungsschriften 2.811.913 und 3.301.729 beschrieben sind. Auf diese Literaturstellen einschließlich der darin offenbarten bevorzugten Ausführungsformem wird hiermit Bezug genommen. Die carboxyfunktionellen Polymeren werden hiernach durch Umsetzung von a) halogenfreien Polycarbonsäureeinheiten, b) salzbildenden Substanzen der Gruppe Alkali, Erdalkali und quartäre Ammoniumsalze, organische Basen und/oder Ammoniak, c1) OH-Gruppen enthaltenden Polymeren mit einer OH-Zahl von 20 bis 300, vorzugsweise 40 bis 200 und c2) Epoxidverbindungen und anschließender Lösung und/oder Dispergierung in Wasser hergestellt.

Das Molekulargewicht derartiger Verbindungen A) liegt im Gewichtsmittel $\overline{M}_w$ zweckmäßigerweise bei 2000 bis 100 000, vorzugsweise 6000 bis 50 000 (Gelchromatographie, Polystyrol-Standard). Ihre Säurezahl in Wasser beträgt im allgemeinen 1 bis 200, vorzugsweise 5 bis 150 (bezogen auf 100 %iges Harz). Die Jodzahl liegt zumeist unterhalb von 50, vorzugsweise unterhalb von 20 und besonders bevorzugt unterhalb von 5.

Bevorzugt handelt es sich bei den Ausgangsstoffen a) bis c2) zur Herstellung der Komponente A, um folgende Verbindungen:

a) ein Trimellithsäure-Einheiten enthaltendes Polycarbonsäureanhydridgemisch entsprechend den Formeln (1) und (2) des anliegenden Formelblattes sowie den Formeln (II) bis (V) des Formelblattes der DE-Offenlegungsschrift 3 301 729, das sich z.B. durch Umsetzung von Trimellithsäureanhydrid mit den entsprechenden zwei- und/oder höherwertigen Alkoholen in üblicher Weise herstellen läßt. Die Säurezahl (in Wasser) dieser Verbindungen (a) liegt zumeist zwischen 10 und 1000, vorzugsweise zwischen 100 und 800;

b) organische Basen, wie aliphatische sekundäre und/oder tertiäre Amine, beispielsweise Diisopropanolamin, sowie Trimethyl,- Triäthyl- und Tripropylamin. Auch können gemischt-substituierte Basen, z.B. N,N-Dimethylcyclohexylamin, N-Methyl-morpholin sowie hydroxylgruppenhaltige Basen, z.B. N,N-Dimethyl- und N,N-Diäthylaminoäthanol verwendet werden. Die verwendete Basenmenge beträgt im allgemeinen 50 bis 120 %, vorzugsweise 55 bis 100 %, bezogen auf die zur Neutralisation der der Komponente A, vorhandenen freien Carboxylgruppen;

c1) Polyester mit freien OH-Gruppen. Sie können aus Polycarbonsäuren wie Phthal-, Isophthal-, Terephthal-, Trimellith-, Pyromellith-, Malein-, Fumar-, Endomethylentetrahydrophthal-, Hexahydrophthalsäure, Bernstein-, Adipin-, Kork-, Azelain-, Sebacinsäure, alkylsubstituierten Derivaten dieser Säuren sowie deren möglichen Anhydriden hergestellt werden. Geeignete Alkoholkomponenten der Polyester sind die auf diesem Gebiet bekannten aliphatischen und/oder cycloaliphatischen Polyole mit 2 bis 4 OH-Gruppen pro Molekül, wie Äthylenglykol, die Propandiole, Butandiole, Pentandiole, Neopentylglykol, Hexandiole, Diäthylenglykol, Glycerin, Trimethyloläthan, Trimethylolpropan, Pentaerythrit und Dipentaerythrit. Die genannten Säuren und Alkohole können teilweise durch Monocarbonsäuren bzw. einwertige Alkohole in an sich bekannter Weise ersetzt sein. Die Komponenten sowie die Polyester können jeweils einzeln oder im Gemisch eingesetzt werden. Weiterhin geeignet sind Polymerisationsprodukte, die z.B. durch Copolymerisation von olefinisch ungesättigten monomeren Verbindungen, von denen mindestens eine auch Hydroxylgruppen enthalten muß, hergestellt werden. Beispiele für derartige Verbindungen sind polymerisierbare Ester organischer Säuren mit 2 - 20 C-Atomen wie Vinylester, z.B. Vinylacetat, Vinylpropionat, Vinylbutyrat, Vinylisobutyrat, Vinylbenzoat, Ester der Acryl- und Methacrylsäure mit einwertigen Alkoholen mit 1 bis 10 C-Atomen wie Methyl-, Äthyl-, die verschiedenen Propyl-, Butyl-, Hexyl- sowie 2-Äthylhexylacrylate und -methacrylate, die Dialkylester der Malein- und Fumarsäure wie Dimethyl-, Diäthyl- und Diallylmaleat bzw. -fumarat. Mischpolymerisierbare äthylenisch ungesättigte

hydroxylgruppenhaltige Monomere sind z.B. Hydroxyalkylacrylate und -methacrylate wie 2-Hydroxyäthyl-, 2-Hydroxypropyl-, 3-Hydroxypropyl- und 4-Hydroxybutylacrylat oder -methacrylat. Es können auch Mischungen von den genannten Estern eingesetzt werden. Geeignet sind ferner äthylenisch ungesättigte monolefinische Kohlenwasserstoffe wie Styrol, $\alpha$-Methlstyrol, Vinyltoluol.

Die Verbindungen (c1) besitzen bevorzugt OH-Zahlen im Bereich von 50 bis 130.

Das Festkörperverhältnis von Polycarbonsäureanhydridgemisch (a) zu (c1) liegt im allgemeinen zwischen 50:50 und 10:90, vorzugsweise 40:60 bis 15:85;

c2) epoxydierte Öle, z.B. solche auf Basis von Soja-, Lein-, Tall- und/oder Ricinenöl mit Epoxyzahlen von 1 bis 50, vorzugsweise von 2 bis 25 und insbesondere 3 bis 15. Die Epoxydgruppen der Komponente c2) reagieren unter Esterbildung mit den COOH-Gruppen der aus a) und c1) erhaltenen Reaktionsgemische. Das Verhältnis des freien Carboxylgruppenäquivalents dieses Reaktionsgemisches zu dem Epoxydgruppenäquivalent von c2) beträgt im allgemeinen 3 : 1 bis 1 : 3, vorzugsweise 1,25 : 1 bis 1 : 1,25.

Als Komponente B) kommen $\alpha\beta$-olefinisch ungesättigte Monomere, und zwar praktisch alle radikalisch polymerisierbaren Monomeren in Frage, wobei jedoch für Copolymerisationen die üblichen Einschränkungen gelten, die durch das Q- und e-Schema nach Alfrey und Price bzw. durch die Copolymerisationsparameter vorgegeben sind (vgl. z.B. Brandrup, Immergut, Polymer Handbook, 2nd ed. (1975) John Wiley & Sohn, New York).

Der Einsatz hydrophiler Monomerer für die Komponente B) ist für die Durchführung der erfindungsgemäßen Polymerisationen möglich, aber nicht generell notwendig.

Als geeignete $\alpha,\beta$-olefinisch ungesättigte Monomere (B) seien hier beispielsweise genannt:

B1) Acrylat- und Methacrylat ( = (Meth)acrylat)-Monomere der allgemeinen Formel

$$CH_2 = \overset{\overset{R^1}{|}}{C} - X \qquad (1),$$

in der $R^1$ und X stehen für:

$R^1$ = H, Methyl;

X =

$$\overset{\overset{O}{\|}}{C}\text{-OH};$$

=

$$\overset{\overset{O}{\|}}{C}\text{-OR}^2$$

mit $R^2$ = gegebenenfalls fluorhaltiger $(C_1\text{-}C_{25})$Alkylrest, vorzugsweise $(C_1\text{-}C_6)$Alkyl; insbesondere ist $R^2$ der Rest: $(CH_2)_n\text{-}(CF_2)_m\text{-}R^3$ mit $R^3$ = H; n = 0 bis 10, vorzugsweise 0 bis 6 und m = 0 bis 25, vorzugsweise 0 bis 10;

=

$$\overset{\overset{O}{\|}}{C}\text{-O}(R^4O)_rR^5$$

mit $R^4$ = $(C_1\text{-}C_6)$Alkyl, das gegebenenfalls Hydroxylgruppen enthalten kann, $R^5$ = H, $(C_1\text{-}C_4)$-Alkyl, vorzugsweise Methyl, Ethyl und r = 1 bis 10, vorzugsweise 1 bis 6;

=

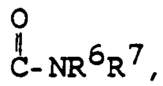

worin $R^6$ für H, Alkyl mit vorzugsweise 1 bis 6 C-Atomen oder für $(R^8O)_sR^9$ steht ($R^8$ = eine gegebenenfalls hydroxylgruppenhaltige $(C_1\text{-}C_6)$-Alkylengruppe, s = 1 bis 10, vorzugsweise 1 und 2, $R^9$ = H oder Alkyl mit vorzugsweise 1 bis 6 C-Atomen) und $R^7$ unabhängig von $R^6$ H oder Alkyl mit vorzugsweise 1 bis 6 C-Atomen bedeutet;
= CN;
= glycidylgruppenhaltiger Acylrest mit vorzugsweise 1 bis 6 C-Atomen, insbesondere der

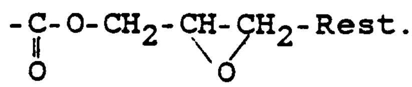

Vertreter von B1) sind beispielsweise (Meth)acrylsäure, Methyl(meth)acrylat, Ethyl(meth)acrylat, Propyl(meth)acrylat, die verschiedenen Butyl(meth)acrylate, 2-Ethylhexyl(meth)acrylat, Ester von (Meth)acrylsäure mit mehrwertigen Alkoholen wie Ethylglykol, Propylenglykol-1,2 oder Propylenglykol-1,3, Butylenglykol-1,4, Trimethylolpropan, Glycerin, wie Hydroxyethyl- oder Hydroxypropyl(meth)acrylat; Umsetzungsprodukte von (Meth)acrylsäure mit endständigen Epoxiden, wie Hexenoxid oder Dodecanoxid oder mit Glycidylestern wie ®Cardura E (Glycidylester der "Versaticsäure"); Aminoalkylverbindungen, wie Methylaminoethyl(meth)acrylat und tert.-Butylaminoethyl(meth)acrylat; N-Alkylol(meth)acrylamide wie N-Methylol(meth)acrylamid sowie entsprechende Ether, wie N-Methylol(meth)acrylamidmethyl-, -ethyl- oder -butylether; (Meth)acrylnitril; Glycidyl(meth)acrylat;
B2) Dicarbonsäuren, wie Maleinsäure, Fumarsäure, Itaconsäure, Sorbinsäure oder deren Mono- und Diester mit $OR^2$ oder $(R^4O)_rR^5$ als Esterrest, wobei $R^2$, $R^4$, $R^5$ und r die obige Bedeutung haben; ferner weitere Derivate wie vorstehend unter B1) beschrieben (Amide, N-Alkylolamide, Nitrile etc.);
B3) Vinylester von aliphatischen Carbonsäuren mit 2 bis 20 C-Atomen, vorzugsweise 2 bis 12 C-Atomen, wie Vinylacetat, Vinylpropionat, Vinylester verzweigter $(C_9\text{-}C_{12})$-Carbonsäuren, wie Versaticsäurevinylester, Linolsäurevinylester;
B4) Vinylverbindungen (andere als B3), wie Vinylether, beispielsweise Methyl-, Ethylvinylether oder Alkylvinylether mit 3 bis 6 C-Atomen; Allylether wie Allylglycidylether; N-Vinylpyrrolidon;
B5) vinylaromatische Monomere wie Styrol, $\alpha$-Methylstyrol, Vinyltoluol, Vinylpyridin;
B6) halogenhaltige, insbesondere chlor- oder fluorhaltige Monomere, wie Vinylchlorid, Vinylidenchlorid, Hexafluorpropen, Perfluorhexylethylen, 2-Hydroperfluorethylallylether, 2-Hydroperfluorpropylallylether;
B7) Monomere mit Isocyanatgruppen, wie Isocyanatoethyl(meth)acrylat sowie entsprechende Derivate mit verkappten Isocyanatgruppen; weiterhin Vinylurethane, erhalten durch Umsatz von Vinylisocyanat mit üblichen Verkappungsmitteln; Beispiele für diese letzte Gruppe sind: N-Vinylcarbaminsäure-tert.-butylester, N-Vinylcarbaminsäure-cyclohexylester, N-Vinylcarbaminsäure-$\beta$-Caprolactam-Addukt.
B8) Monomere vom Typ mehrfach, vorzugsweise zwei bis dreifach ethylenisch ungesättigter Verbindungen wie Divinylbenzol, Ethandioldi(meth)acrylat, Propandioldi(meth)acrylat, Butandioldi(meth)acrylat, Hexandioldi(meth)acrylat, Glycerintri(meth)acrylat, Pentaerythritoltri(meth)acrylat und Diallylphthalat. Diese mehrfach ethylenisch ungesättigten Monomeren werden nur zusammen mit mindestens einem Monomeren B1) bis B7) eingesetzt; ihre Menge beträgt im allgemeinen 0,01 bis 20 Gew.-%, bezogen auf die Gesamtmenge der Monomeren B). Durch den Zusatz dieser als Vernetzer wirkenden Monomeren sind Dispersionen mit teilweise oder vollständig vernetzten Partikeln herstellbar.

Innerhalb der obigen Gruppen B1) bis B8) können auch Gemische der einzelnen Vertreter eingesetzt werden. Bevorzugt ist erfindungsgemäß der Einsatz, der $\alpha,\beta$-olefinisch ungesättigten Verbindungen der Gruppe B1).

Um Vernetzungsreaktionen im Lack bei der Filmbildung durchführen zu können, ist es zweckmäßig, daß sowohl im Falle der Selbstvernetzung als auch im Falle der Fremdvernetzung Monomereinheiten mit funktionellen Gruppen in dem erfindungsgemäßen Bindemittel vorhanden sind. Unter Monomeren mit funktionellen Gruppen sind solche zu verstehen, die neben ihrer olefinischen Doppelbindung, mit der sie bei der Bindemittelherstellung in das entstehende Copolymerisat einpolymerisiert werden, zusätzlich noch chemische Gruppierungen tragen, die zu einem späteren Zeitpunkt, bevorzugt nach dem Aufbringen des fertigen Lackes unter Einwirkung von thermischer oder Strahlungsenergie und/oder Katalysatoren, mit

chemischen Gruppierungen der gleichen oder einer anderen Art umgesetzt werden können, in der Weise, daß eine Vernetzung erfolgt. Beispiele für einsetzbare chemische Gruppierungen, die im aufgebrachten Lack zu Vernetzungen führen können, sind Carbonsäure-, Sulfosäure-, Hydroxy-, Amino-, Amido-, Keto-, Aldehyd-, Lactam-, Lacton-, Isocyanat- und Epoxygruppen. Copolymerisationsfähige Monomere, die derartige funktionelle Gruppierungen tragen, sind bekannt. Ein Teil dieser vernetzend wirkenden Gruppierungen ist bereits in der Komponente A) vorhanden (Carboxyl-, Hydroxyl- und Epoxidgruppen). Um eine möglichst hohe Vernetzungsdichte zu erreichen, werden auch im Rahmen der Komponente B) zweckmäßigerweise Comonomere eingesetzt, die entsprechend reaktive Gruppen enthalten. Beispiele hierfür sind Hydroxalkyl(meth)acrylate, N-alkylol(meth)acrylate, Glycidyl(meth)acrylate, Isocyanatoalkyl(meth)acrylate. Die Menge dieser Comonomeren innerhalb der Komponente B) beträgt im allgemeinen 0 bis 60 Gew.-%, vorzugsweise 0,5 bis 40 Gew.-%.

Die Mengenverhältnisse der Komponenten A) und B) können in weiten Grenzen schwanken. Vorzugsweise werden 5 bis 95 Gew.-%, insbesondere 10 bis 69 Gew.-% und speziell 25 bis 45 Gew.-% der Komponente A) mit 95 bis 5 Gew.-%, insbesondere 90 bis 31 Gew.-% und speziell 75 bis 55 Gew.-% der Monomeren B) umgesetzt, wobei die Mengenverhältnisse auf den Gesamtfeststoffgehalt der Komponenten A) und B) bezogen sind. Die selbsthärtende Komponente A) gelangt dabei im allgemeinen in Form eines 5 bis 65 Gew.-%igen wäßrigen Systems zum Einsatz.

Bevorzugte Dispersionscopolymerisate können als Monomereinheiten, bezogen auf die Menge der Komponente B) bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% Acrylsäure und/oder Methacrylsäure enthalten, wobei die Summe der Monomereinheiten stets 100 % ist. Besonders bevorzugt ist ein Mischungsverhältnis, das 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% Acrylsäure und/oder Methacrylsäure als Monomereinheiten enthält.

Das erfindungsgemäße Polymerisationsverfahren wird vorzugsweise als Emulsionspolymerisation in wäßrigem Medium bei Temperaturen im Bereich zwischen 0 und 150, vorzugsweise 20 und 100, insbesondere 40 und 90 ° C durchgeführt. Hierbei wird das carboxyfunktionelle Polymere A) mit den Vinylmonomeren B) vorzugsweise unter Zusatz eines Polymerisationsinitiators und gegebenenfalls weiterer üblicher Zusätze wie Emulgatoren und/oder Schutzkolloiden sowie Molekulargewichtsreglern polymerisiert. Das wäßrige Medium des Polymerisationsansatzes kann aus den wäßrigen Systemen der Komponente A) stammen, im allgemeinen wird jedoch noch Wasser dem Ansatz zugegeben, um die besten Bedingungen für die Emulsionspolymerisation zu erreichen.

Die Polymerisation kann in der Weise durchgeführt werden, indem das carboxyfunktionelle Polymere A) als wäßriges System, dem die gesamte Menge des bei der Polymerisation anwesenden Wassers zugegeben worden ist, zusammen mit einem Teil eines Initiators und gegebenenfalls einem Emulgator und einem Molekulargewichtsregler vorgelegt und auf die gewünschte Polymerisationstemperatur vorgeheizt wird, worauf das Monomerengemisch B) sowie der Rest des Initiators langsam zugegeben wird. Es ist jedoch auch möglich, jeweils ein Teil des Wassers, des carboxyfunktionellen Polymeren A) und gegebenenfalls des Emulgators vorzulegen und aus dem verbleibenden Wasser, den verbleibenden Anteilen der Komponente A), den Vinylmonomeren B) und gegebenenfalls einem Emulgator eine Voremulsion herzustellen, die dann in die auf Polymerisationstemperatur vorgeheizte und mit einem Polymerisationsinitiator versehene Vorlage langsam zugegeben wird. Die Zulaufzeit beträgt im allgemeinen 30 bis 180 Minuten. Nach Beendigung des Zulaufs des Monomerengemisches wird der gesamte Ansatz noch für 1 bis 3 Stunden bei 60 bis 90 ° C, vorzugsweise bei 70 bis 85 ° C nachgerührt, wobei gegebenenfalls weiterer Initiator zugesetzt wird, um einen vollständigen Umsatz der Vinylmonomeren zu erzielen. Der Feststoffanteil in den erhaltenen Polymerisatdispersionen beträgt im allgemeinen 5 bis 75, vorzugsweise 10 bis 65 Gewichtsprozent. Der Wert für das mittlere Molekulargewicht $\overline{M}_w$ des erhaltenen Polymerisats beträgt im allgemeinen 50 000 bis 10 Millionen, vorzugsweise 75 000 bis 1 Million, bezogen auf Polystyrol Standard-Gelchromatogramm.

Als radikalbildende Initiatoren kommen beispielsweise Percarbonate, Perester wie tert.-Butylperpivalat, Peroctoat, Benzoylperoxyd, o-Methoxybenzoylperoxyd, Dichlorbenzylperoxyd, Azodiisobuttersäuredinitril, insbesondere aber Peroxyverbindungen oder aliphatische Azoverbindungen in Frage. Der Initiator kann wasserlöslich und/oder monomerlöslich sein. Bevorzugt sind z.B. Natrium-, Kalium-, Ammoniumperoxydisulfat bzw. Natrium-, Kalium-, Ammoniumperoxydisulfat-Redoxysteme mit Natrim-, Kalium-, Ammoniumsulfiden, -sulfiten oder anderen Reduktionsmitteln. Die Menge des Polymerisationsinitiators beträgt im allgemeinen 0,01 bis 10, vorzugsweise 0,02 bis 5, insbesondere 0,05 bis 3 Gew.-%, bezogen auf die Gesamtmenge der Vinylmonomeren B).

Die Polymerisation kann in Gegenwart oder Abwesenheit eines Emulgators und/oder eines Schutzkolloids durchgeführt werden. Dabei kommen gegebenenfalls anionische und/oder nicht-ionische Emulgatoren zum Einsatz. Beispiele für anionische Emulgatoren sind die Alkali- und Ammoniumsalze von Schwefelsäurehalbestern von Alkylphenolen oder den obengenannten Alkoholen oder auch Alkyl- oder Arylsulfonat, vorzugsweise die Alkalisalze des Schwefelsäurehalbesters eines mit 4 bis 5 Mol Äthylenoxyd umgesetzten Nonylphenols, Natriumlaurylsulfat, Natriumlauryläthoxylatsulfat und sekundäre Natriumalkansulfonate, deren Kohlenstoffkette 8 bis 12 C-Atome enthält.

Ferner kann zur Erhöhung der Stabilität der wäßrigen Copolymerisat-Dispersion zusätzlich ein nichtionischer Emulgator vom Typ eines äthoxylierten Alkylphenols oder Fettalkohols zum Beispiel Nonylphenol mit 4 bis 30 Mol Äthylenoxyd in Mischung mit dem anionischen Emulgator eingesetzt werden.

Die Menge des anionischen Emulgators beträgt 0 bis 15 Gew.-%, bezogen auf die Vinylmonomeren B).

Weiterhin kann als Emulgator ein "Fluortensid" verwendet werden, wobei unter dem Begriff "Fluortensid" oberflächenaktive Verbindungen verstanden werden, die als hydrophobe Bestandteile Perfluoralkylreste mit 2 bis 20 C-Atomen oder Perfluoraralkylreste im Molekül enthalten z.B. Perfluoralkylsulfonsäuren, Perfluoraralkylsulfonsäuren, langkettige Perfluoralkylcarbonsäuren, Perfluoralkanphosphonsäuren -phosphinsäuren, mit jeweils 1 bis 15 C-Atomen im Alkanrest, die Salze dieser Säuren, Perfluoralkylsulfate und Perfluoraralkylsulfat.

Durch den Einsatz von Molekulargewichtsreglern wie Mercaptane, halogenhaltige Verbindungen und andere radikalübertragene Substanzen kann das Molekulargewicht der Polymerisate in bekannter Weise herabgesetzt werden. Bevorzugt sind Butylmercatan, Octylmercaptan, Dodecylmercaptan, Tetrakismercaptoacetylpentaerythrit, Chloroform, Bromoform, Trichloräthylen, Trichlorbrommethan, Tetrachlorkohlenstoff und Toluol.

Die erfindungsgemäßen Polymerisatdispersionen sind selbstvernetzend. Daneben besteht auch noch die Möglichkeit der zusätzlichen Fremdvernetzung. Hierzu wird die erfindungsgemäße Bindemitteldispersion, die eine oder mehrere der genannten funktionellen Monomereinheiten trägt, bei der Lackformulierung mit einer weiteren niedermolekularen, oligomeren und/oder polymeren Verbindung vermischt, die ebenfalls funktionelle Gruppierungen trägt.

Die Bindemittelvernetzung erfolgt auch bei der Fremdvernetzung, vorzugsweise beim Einbrennen, und zwar bevorzugt durch Reaktion zwischen der erfindungsgemäßen Polymerisatdispersion und der zugesetzten Fremdkomponente. Dabei kann nicht immer ausgeschlossen werden, daß beide Komponenten auch noch mit sich selbst Reaktionen und/oder Vernetzungen eingehen können.

Vernetzende Fremdkomponenten sind beispielsweise Aminoplastharze, insbesondere Melamin-Formaldehyd-Harze, Phenolplastharze, Acrylat-Harze, Isocyanate oder verkappte Isocyanat-Harze, d.h. Isocyanat-Harze mit blockierter Isocyanatgruppe, die mit oder ohne Einwirkung von Katalysatoren, wie Malein-, Zitronen-, Phosphor-, Alkylphosphorsäure, p-Toluolsulfonsäure und/oder Naphthalindisulfonsäure, in Gegenwart von Bindemittelcopolymerisaten, die bevorzugt Hydroxyl-, Amid- oder Carboxylgruppen tragen, beim Einbrennen hochvernetzte Beschichtungen ergeben können. Besonders bevorzugt werden Acrylharze und/oder methylverätherte Melaminharze als fremdvernetzende Komponenten eingesetzt.

Aufgrund ihres chemischen Aufbaus sind die erfindungsgemäßen Polymerisatdispersionen für eine vielseitige Anwendung geeignet, z.B. als Bindemittelkomponente zur Herstellung von bei Raumtemperatur oder bei erhöhter Temperatur härtenden Beschichtungssystemen, insbesondere für metallic Basislacke, metallfreie (uni) Basislacke, Reparaturlacke oder Elektrotauchlacke. Sie sind nicht nur fremdvernetzbar, sondern auch kombinierbar und im allgemeinen verträglich mit anderen wäßrigen Kunststoffdispersionen, z.B. Thermoplasten auf Basis von Polyvinylacetat, -vinylchlorid, Acryl- und/oder Methacryl-Polymerisaten, Polyvinyläther, -chloropren, -acrylnitril und Äthylen-Butadien-Styrol-Copolymerisaten. Besonders verträglich sind sie mit Dispersionen solcher Copolymerisate, die durch Copolymerisation der vorstehend genannten Monomeren mit funktionellen Monomeren, wie Hydroxyalkylacrylaten bzw. -methacrylaten, stärker polar gemacht wurden. Gegebenenfalls werden die Dispersionen zusammen mit Dispersionshilfsmitteln eingesetzt.

Die erfindungsgemäßen Polymerdispersionen sind auch kombinierbar mit verdickend wirkenden Substanzen auf Basis von Polyacrylaten, Hydroxyethylcellulosen, Polyvinylalkoholen u.a., so daß jede gewünschte Einstellung der rheologischen Eigenschaften möglich ist. Auch sogenannte Reaktivverdünner können eingesetzt werden.

Mit den erfindungsgemäßen Polymerdispersionen, die eine ausgezeichnete Stabilität gegenüber UV-Strahlung aufweisen, können unpigmentierte, pigmentierte oder mit anderen Zusatzstoffen versehene Beschichtungssysteme, wie z.B. Lacke, hergestellt werden, die gegebenenfalls auch unter der Einwirkung von Katalysatoren bereits bei Raumtemperatur genügend rasch härten und dann Überzüge mit ausgezeichneten mechanischen Eigenschaften liefern. Man erhält dabei Filme mit hoher mechanischer Festigkeit und hoher chemischer Beständigkeit. Übliche Lackzusatzstoffe sind beispielsweise in der DE-Offenlegungsschrift 3.301.729 beschrieben.

Die erfindungsgemäßen Polymerdispersionen lassen sich auf die verschiedensten Unterlagen aufbringen, sofern diese den Härtungstemperaturen des Überzugs standhalten. Geeignete Unterlagen sind z.B. Keramik, Holz, Glas, Beton, Kunststoffe, vorzugsweise Metall, wie Eisen, Zinn, Titan, Kupfer, Aluminium, Stahl, Messing, Bronze, Magnesium oder dergleichen, wobei die Unterlagen gegebenenfalls noch durch geeignete mechanische und/oder chemische Vorbehandlung haftfreudiger bzw. korrosionsbeständiger gemacht werden können. Jedoch haften sie ausgezeichnet auf den verschiedensten Metallunterlagen ohne haftvermittelnde Grundierung bzw. Zwischenschicht. Die gute Haftung dieser Lackierungen entspricht den Werten GT OA bis GT 1A nach den Prüfvorschriften gemäß DIN 53 151. Außerdem lassen sich diese Überzüge, die je nach Wunsch glänzend oder matt eingestellt werden können, sehr gut verformen, weisen hohe Wetterbeständigkeit und ausgezeichnete chemische Beständigkeit auf.

Die erfindungsgemäßen Dispersionen sind für die Herstellung von korrosionsschützenden Überzügen und/oder Zwischenbeschichtungen für die verschiedensten Anwendungsgebiete geeignet, insbesondere als resistente Lackierungen und Mattlackierungen, sowie metallic Lackierungen. Die Schichtdicken der einzelnen Lacküberzüge betragen beim Basislack im allgemeinen 10 - 40, vorzugsweise 15 - 25 µm, während die Deckschicht im allgemeinen Stärken von 20 - 70, vorzugsweise 30 - 50 µm aufweist.

Beispielsweise wird bei der Herstellung von Uni- oder Metallic-Lackschichten die Bindemittelmischung auf eine vorbereitete Fläche aufgebracht, z.B. auf eine mit einem Füller versehene Automobilkarosserie aufgespritzt, an der Luft getrocknet, und anschließend mit einem Decklack überzogen. Beide Schichten werden dann in einem Arbeitsgang, z.B. während 10 - 40 min bei 100 - 180 °C eingebrannt, wobei die Temperatur in Relation zu der Einbrennzeit steht.

Weiter eignen sich die erfindungsgemäßen Dispersionen für die Beschichtung und Auskleidung von Gegenständen, die mit Treibstoffen und Lösungsmitteln in Berührung kommen, ausserdem für Schutzüberzüge gegen atmosphärische Einflüsse, wie Straßenmarkierungen, Bauteile für elektrotechnische Zwecke bzw. deren Elemente, insbesondere für elektrische Leiter, sowie für Beschichtungen von thermisch beanspruchten Gegenständen.

Aufgrund ihrer günstigen Eigenschaften sind die erfindungsgemäßen Dispersionen auch hervorragend für die Einschichtlackierung geeignet. Je nach Wahl der Komponenten können mit den erfindungsgemäßen Bindemitteln bechichtete Bleche nachträglich durch Tiefziehen, Abkanten, Profilieren, Prägen oder dergleichen ohne nennenswerte Beeinträchtigung der übrigen günstigen Eigenschaften verformt werden. Die haftende Überzugsschicht kann unverändert bleiben, sie kann aber auch als Zwischenschicht, also als Unterlage für weitere Überzüge dienen, die wiederum aus demselben oder einem anderen üblichen Beschichtungsmaterial bestehen können.

Wegen ihrer guten Verdünnbarkeit und ihrer anderen günstigen Eigenschaften eignen sich die erfindungsgemäßen Dispersionen auch zur Verwendung für die Elektrotauchlackierung.

Eine weitere Möglichkeit ist ihre Verwendung für wasserverdünnbare Klebstoffe. Auch als Bindemittel für textile, organische und/oder anorganische Materialien sind sie einsetzbar. Sie sind auch zur Verwendung für härtbare Formmassen, Gießharze, Kitte, zellige oder poröse Stoffe, wie Schaumstoffe und als Isolierlack geeignet.

In den folgenden Vorschriften und Beispielen bedeuten jeweils, wenn nicht anders angegeben, T Gewichtsteile und % Gewichtsprozent. Wasser bedeutet stets entionisiertes Wasser, SZ Säurezahl, OHZ OH-Zahl. Wenn nicht anders angegeben, wurden als Polycarbonsäure-Komponente a) jeweils Anhydridgemische, hergestellt durch Umsetzung von Trimellitsäureanhydrid mit Propandiol-1,2, bestehend somit aus Trimellitsäureanhydrid und Anhydriden der Formeln (1) und (2) (siehe Formelblatt) und als OH-Gruppen enthaltende Komponente $c_1$) jeweils Polyester, hergestellt, wie in der DE-OS 28 11 913 beschrieben, eingesetzt.

Beispiele:

1a) Herstellung eines carboxyfunktionellen epoxydgruppenhaltigen Polymeren (Komponente A)

In einem 4 l Reaktionsgefäß wurden 1536 g Trimellithsäureanhydrid (TMSA) unter Zugabe von 80 g Xylol aufgeschmolzen. Es wurden 2,5 g Natrium-Wolframatophosphorsäure zugesetzt und der Ansatz auf 190 °C erhitzt. Danach wurden 308 g Propandiol-1,2 in die Schmelze gegeben und der Ansatz innerhalb von 1 bis 1,5 Stunden auf 200 °C erwärmt. Die Reaktionstemperatur wurde auf 220 °C erhöht und so lange

gehalten, bis die Wasser-Abspaltung beendet war. Nach ca. 4 h betrug die Wassermenge ca. 150 bis 160 ml. Das Reaktionsgemisch wurde dann auf ca. 180 °C abgekühlt und das Xylol mittels Wasserstrahlvakuum abdestilliert. Nach Abkühlen wurden ca. 1680 g eines festen, gelblichen Harzes erhalten.

Folgende Kennzahlen wurden gefunden:

| | |
|---|---|
| Säurezahl (in Aceton/$H_2O$) | 550 - 580 mg KOH/g |
| Säurezahl (in Butanol) | 270 - 290 mg KOH/g |

Die GPC-Analyse lieferte folgende Zusammensetzung:
TMSA : 5 - 20 %
Bisanhydrid : 40 - 60 %
Oligomere : 20 - 55 %.

In eine Lösung von 127 T eines Polyesters auf Basis Terephthalsäure, Isophthalsäure, Trimellithsäure, Ethylenglykol, Neopentylglykol und Hexandiol (OHZ = 107) in 70 T Methyläthylketon wurden 100 T des vorstehend beschriebenen Anhydrid-Gemisches, das in 30 T Aceton bei 50 °C homogenisiert worden war, innerhalb einer Stunde zugetropft. Bei 90 °C wurde so lange gerührt, bis das Reaktionsgemisch eine Säurezahl in Wasser von 197 (bezogen auf 100 %iges Harz) erreicht hatte. Danach wurden noch 15 T Wasser zugemischt. Nach 6stündigem Rühren bei 80 - 90 °C betrug die Säurezahl in Butanol 180 (100 %iges Harz). Die Gemischtemperatur wurde auf 60 °C gesenkt und 133 T eines epoxydierten Leinöls (Epoxyzahl = 8,9) innerhalb von 2 Stunden zugetropft. Die Mischung wurde so lange gerührt, bis die Säurezahl in Butanol auf 90 abgesunken war. Danach wurde eine Mischung von 56 T Dimethylaminoäthanol in 540 T Wasser eingerührt. Es wurde eine hellgelbe, opaleszierende Lösung erhalten, aus der bei 0,1 bar und 40 °C das organische Lösungsmittel abdestilliert wurde. Nach Filtration wurde eine gelbliche, praktisch klare wäßrige Harzlösung erhalten. Festkörpergehalt (1 h bei 125 °C) ca. 39 %; pH-Wert ca. 6.

1b) Herstellung der Polymerisatdispersion

355 T der (39 %igen) wäßrigen Dispersion aus 1a) wurden in einem Reaktor, der mit Rührer, Rückflußkühler, Innenthermometer und Dosiervorrichtungen für die Monomeren sowie den Initiator ausgerüstet war, mit 452 T Wasser gemischt, die Mischung unter Rühren auf 80 °C erwärmt und eine Lösung von 0,5 T Ammoniumperoxydisulfat in 35 T Wasser zugesetzt. 5 Minuten nach der Zugabe des Initiators wurden 35 T einer Monomerenmischung aus 165 T Methylmethacrylat, 142 T n-Butylacrylat und 24 T Hydroxyethylacrylat zugesetzt und nach weiteren 15 Minuten Vorpolymerisation die verbliebene Monomermenge über 2 Stunden zudosiert. 10 Minuten nach Beendigung der Zugabe wurden weitere 0,2 T Ammoniumperoxydisulfat, gelöst in 10 T Wasser, innerhalb von 10 Minuten zugesetzt und der Ansatz noch 2 Stunden bei 80 °C gerührt, um vollständigen Umsatz zu erzielen. Es resultierte eine stabile wäßrige Dispersion mit ca. 40 % Feststoffgehalt.

2) Herstellung einer Polymerisatdispersion

Beispiel 1b wurde wiederholt mit dem Unterschied, daß anstelle Hydroxyethylacrylat nunmehr Glycidylmethacrylat eingesetzt wurde. Es resultierte ebenfalls eine stabile Dispersion mit ca. 40 % Feststoffgehalt.

3a) Herstellung eines carboxyfunktionellen epoxidgruppenhaltigen Polymeren (Komponente A)

100 T Anhydrid-Gemisch (SZ/$H_2O$ = 486) in 108 T Xylol, 141 T eines Polyesters (OHZ = 88) in 70 T Methyläthylketon wurden wie in Beispiel 1a zur Reaktion gebracht, bis das Reaktionsgemisch eine Säurezahl in Wasser von 165 (100 %iges Harz) erreicht hatte. Danach wurden 12 T Wasser zugemischt und nach 6stündigem Rühren bei 80 - 90 °C eine Säurezahl in Butanol von 168 (100 %iges Harz) erreicht. Die Gemischtemperatur wurde auf 60 °C gesenkt und nach Zugabe von 0,3 T Lithiumbenzoat 132 T eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 T Dimethylamin (60 %ig in Wasser) in 860 T Wasser eingerührt. Es wurde eine hellgelbe, opaleszierende Lösung erhalten, aus der bei 0,1 bar und 40 °C das organische Lösungsmittel abdestilliert wurde. Nach Filtration wurde eine gelbliche, praktisch klare wäßrige Harzlösung erhalten. Festkörpergehalt (1 Stunde bei 125 °C) ca. 32 %; pH-Wert ca. 6.

3b) Herstellung der Polymerisatdispersion

In einem Reaktor wie in Beispiel 1b) wurden 705 T der wäßrigen (32 %igen) Dispersionen aus 3a) und 196 T Wasser gefüllt. Diese Mischung wurde unter Rühren auf 80 °C erwärmt und eine Lösung von 0,5 T Ammoniumperoxydisulfat in 35 T Wasser zugesetzt. 5 Minuten nach der Zugabe des Initiators wurden 35 T einer Monomerenmischung aus 125 T Methylmethacrylat, 94 T n-Butylacrylat und 17 T Hydroxymethylmethacrylat zugesetzt und die Mischung wie in Beispiel 1b beschrieben weiter verarbeitet. Es resultierte eine stabile Dispersion mit ca. 40 % Feststoffgehalt.

4) Herstellung einer Polymerisatdispersion

Beispiel 3b wurde mit dem Unterschied wiederholt, daß Glycidylmethacrylat anstelle Hydroxyethylmethacrylat eingesetzt wurde. Es resultiert eine stabile Dispersion mit ca. 40 % Feststoffgehalt.

Vergleichsbeispiele

V1) Für die nachfolgende Bindemittelprüfung wurde die Harzlösung des Beispiels 1a) eingesetzt.

V2) Für die nachfolgende Bindemittelprüfung wurde die Harzlösung des Beispiels 3a) eingesetzt.

V3) In einem Reaktionsgefäß wie Beispiel 1b) wurden 14 T einer Monomeremulsion aus 652 T Wasser, 21 T einer 50 %igen wäßrigen Lösung eines Alkylarylpolyglykolethersulfat-Natriumsalzes ((R)Hostapal BV der Fa. Hoechst AG) sowie 1,75 T Ammoniumperoxydisulfat in 536 T Wasser gelöst und auf 80 °C erwärmt. In diese Mischung wurden weitere 80 T einer 50 %igen wäßrigen Lösung des genannten Alkylarylpolyglykolethersulfat-Natriumsalzes, 22 T N-Methylolacrylamid, 44 T Methacrylsäure, 55 T Glycidylmethacrylat, 110 T Hydroxyäthylmethacrylat, 550 T Methylmethacrylat, 550 T n-Butylacrylat sowie 3 T Ammoniumperoxydisulfat gegeben. Nach ca. 10 Minuten wurde der Rest der Monomeremulsion über 3 Stunden zudosiert. Im Anschluß daran wurde die Temperatur auf 85 °C erhöht und 2 Stunden nachgerührt, SZ 22. Nach dem Abkühlen auf 20 °C wurde der Ansatz mit ca. 80 T einer 25 %igen wäßrigen Dimethylaminoethanollösung auf einen pH-Wert von 8,0 - 8,2 eingestellt. Es resultierte eine wäßrige Dispersion mit einem Feststoffgehalt von ca. 50 %.

V4) 100 T der Dispersion aus dem Vergleichsbeispiel V3 (50 % Feststoff) wurden mit 156,3 T der Dispersion aus Beispiel 3a) (32 % Feststoff) unter Rühren gemischt, wobei eine wäßrige Bindemitteldispersion mit ca. 39 % Feststoffgehalt resultierte.

5) Die vorstehend beschriebenen Bindemitteldispersionen der Beispiele 1 bis 4 sowie der Vergleichsbeispiele V1-V4 wurde in folgender Weise geprüft:

A. Rezeptur für nichtpigmentierte Basislacke: Die Bindemittellösungen bzw. -Dispersionen der genannten Beispiele wurden mit Wasser auf einen Feststoffgehalt von 25 % verdünnt und in dieser Form geprüft.

B. Rezeptur für pigmentierte "Metallic"-Basislacke: 5 T einer handelsüblichen Aluminiumpaste (Stapa Hydrolac WH 33 n.l. der Firma Eckart, Fürth/Bayern mit einem Feststoffgehalt von 65 % und einer durchschnittlichen Teilchengröße der Aluminiumflitter von 11 µm wurden mit 5 T Ethylenglykolmonobutylether und 0,01 T eines handelsüblichen Netzmittels ((R)Genapol PF 20 der Firma Hoechst AG) 20 Minuten mittels eines Schnellrührers bei einer Umfangsgeschwindigkeit von 5 m/s dispergiert. 10 T der erhaltenen Aluminium-Dispersion wurde mit jeweils 100 T der nach 5A) erhaltenen Bindemitteldispersionen gemischt, woraus sich ein Feststoffgehalt von jeweils 25,6 % ergab mit einer Auslaufzeit nach DIN 53 211 (23 °C) von 13 Sekunden.

C. Prüfungen

Die pigmentierten und nichtpigmentierten Lacke gemäß 5A) und 5B) wurden wie folgt geprüft:

Karosseriebleche wurden nach dem Kataphorese-Elektrotauchlackier-Verfahren grundiert und innerhalb 20 Minuten bei 180 °C eingebrannt. Die grundierten Bleche wurden anschließend mit einem Einbrennfüller auf Basis eines handelsüblichen Polyesterharzes ((R)Alftalat VAN 1951 der Firma Hoechst AG) und eines ebenfalls handelsüblichen Butyl-veretherten Melaminharzes ((R)Maprenal MF 590 der Firma Hoechst AG) beschichtet und abermals innerhalb 20 Minuten bei 160 °C gehärtet. Auf die derart vorbereiteten Bleche wurden anschließend die pigmentierten und unpigmentierten Basislakke gemäß 5A) und 5B) in einer Trockenfilmstärke von 10 bis 15 µm aufgebracht.

Nach Trocknung (5 Minuten) bei Raumtemperatur (23 °C 55 % relativer Luftfeuchte) wurden die Lackoberflächen mit einem 2K-Klarlack, einer Mischung eines handelsüblichen OH-gruppenhaltigen Acrylatharzes ((R)Macrynal SM 510n der Firma Hoechst AG) und eines ebenfalls handelsüblichen

aliphatischen Polyisocyanats ($^{(R)}$Desmodur N/75 %ig der Firma Bayer AG), in einer Trockenfilmstärke von ca. 35 µm beschichtet. Die beschichteten Bleche mit 4-schichtigem Lackaufbau wurden für 20 Minuten bei 135 °C eingebrannt.

Nach 16 Stunden Lagerung bei Raumtemperatur wurden die beschichteten Bleche einer Wasserlagerung von 120 Stunden in Wasser von 40 °C unterzogen und anschließend die Lackierungen auf Bläschenbildungen, Verfärbung, Oberflächenstörungen, Glanzverlust und Haftungsverlust untersucht. Die Prüfergebnisse sind in Tabelle 1 aufgeführt.

Tabelle 1

| Prüfergebnisse der Bindemitteldispersionen in nichtpigmentierten Basislacken und in metallic-base-coat-Rezepturen unter "Erstlackierungsbedingungen" | | | | | |
|---|---|---|---|---|---|
| Disp. aus Beispiel | Klarlack Rezeptur 5A | | metallic-base-coat Rezeptur 5B | | Rheologie einstellbar mit Verdicker (wässr. Lacke nach 5A und 5B). |
| | Wasserlagerung | Zwischenschichthaftung | Wasserlagerung | Zwischenschichthaftung | |
| 1b | + | + | + | + | ja |
| 2 | + | + | + | + | ja |
| 3b | + | + | + | + | ja |
| 4 | + | + | + | + | ja |
| V1 | + | + | - | + | nein |
| V2 | + | + | + | + | nein |
| V3 | + | - | + | - | ja |
| V4 | - | - | - | - | nein |
| Bezüglich der Bewertung siehe Legende bei Tabelle 2 | | | | | |

Um eine einwandfreie Applizierbarkeit der Lacke zu gewährleisten, muß die Rheologie der Lacke einstellbar sein. Dies gelingt nicht in den Fällen V1, V2 und V4 mit Verdickern entsprechend dem Stand der Technik.

Ein weiterer Satz Bleche wurde, ohne den Klarlack anzuschleifen, ein zweites Mal mit dem jeweils entsprechenden pigmentierten und unpigmentierten Basislack in der oben erwähnten Weise beschichtet und anschließend ein Einbrennklarlack aufgebracht, aufgebaut aus einem handelsüblichen, fremdvernetzenden Acrylharz ( Synthacryl SC 303 der Firma Hoechst AG) und einem Butyl-veretherten Melaminharz (Maprenal MF 650, Firma Hoechst AG), der zusätzlich 3 % eines Katalysators in Form von p-Toluolsulfonsäure, berechnet auf festes butyliertes Melaminharz, enthielt. Diese mit jeweils 6 Lackschichten versehenen Prüfbleche wurden für 45 Minuten bei 80 °C eingebrannt. Dieser Test simulierte den Einsatz der erfindungsgemäßen Polymerisate als Reparaturlacke in einer Automobilfabrik. Diese Prüfbleche wurden dem oben erwähnten Testschema unterzogen. Bei der Auswertung der Prüfung wurde besonders auf die Zwischenschichthaftung zwischen dem 2K-Polyurethanklarlack und der darauffolgenden Basisschicht geachtet. Die Prüfergebnisse sind in Tabelle 2 aufgeführt.

Tabelle 2 : Prüfergebnisse der Bindemitteldispersionen in nichtpigmentierten Basislacken und in metallic-Basislacken unter "Reparaturbedingungen"

| Disp. aus Beispiel | Klarlack Rezeptur 5A Wasser-lagerung | Klarlack Rezeptur 5A Zwischen-schicht-haftung | metallic-base-coat Rezeptur 5B Wasser-lagerung | metallic-base-coat Rezeptur 5B Zwischen-schicht-haftung |
|---|---|---|---|---|
| 1b | + | + | + | + |
| 2 | + | + | + | + |
| 3b | + | + | + | + |
| 4 | + | + | + | + |
| V1 | - | + | - | + |
| V2 | - | + | - | + |
| V3 | + | - | + | - |
| V4 | - | - | - | - |

\+ : Test bestanden (keine Erweichung, keine Bläschen etc. bzw. kein Haftungsverlust)

\- : Test nicht bestanden (Erweichung, Bläschen etc. bzw. Haftungsverlust)

6) A Die vorstehend beschriebenen Bindemitteldispersionen des Beispiels 4 und Vergleichsbeispiels V3) wurden mit Wasser auf einen Feststoffgehalt von 25 % verdünnt und in dieser Form geprüft.

6) B Rezeptur für pigmentierte, metallfreie Basislacke (sogen. uni-Basislacke)

304 T der unter 6) A beschriebenen Bindemitteldispersionen der Beispiele 4) und V3) werden mit 220 T einer Pigmentpaste, bestehend aus 600 T handelsüblichem Titandioxyd Pigment (Kronos(R)CL 310 Titangesellschaft, Frankfurt), 50 T Butylglykol und 300 T einer 2,4 %igen, wäßrigen Lösung eines handelsüblichen Polyacrylatverdickers (Viscalex(R)HV 30 der Fa. Allied Colloids, England) gemischt und mit Wasser zu einem Feststoffgehalt von 17 % verdünnt. Die uni-Basislacke werden anschließend mit Triethylamin auf einen pH-Wert von 7,2 eingestellt.

6) C Prüfungen

Die pigmentierten uni-Basislacke gemäß 6) B werden nach 5) C appliziert und geprüft. Die Prüfergebnisse sind in Tabelle 3 zusammengefaßt.

Tabelle 3

| Prüfergebnisse der Bindemitteldispersionen in pigmentierten uni-Basislacken unter "Erstlackierungsbedingungen", Rezeptur 6) B. | | |
|---|---|---|
| Disp. aus Beispiel | Wasserlagerung | Zwischenschichthaftung |
| 4) | + | + |
| V3) | + | - |
| + = Test bestanden (keine Erweichung, keine Bläschenbildung etc., bzw. kein Haftungsverlust)<br>- = Test nicht bestanden (Erweichung, Bläschen etc., bzw. Haftungsverlust) | | |

## Patentansprüche

**Patentansprüche für folgende Vertragsstaaten : BE, CH, DE, FR, GB, IT, LI, NL, SE**

1. Wäßrige Polymerisatdispersionen auf Basis von A) 1 bis 99 Gew.-% eines carboxyfunktionellen Polymerisats, das zusätzlich Epoxygruppen enthält, B) 1 bis 99 Gew.-% eines Polymerisates aus mindestens einem $\alpha,\beta$-olefinisch ungesättigten Monomeren, wobei das Polymerisat B) in Gegenwart des Polymerisats A) hergestellt worden ist, C) 0 bis 20 Gew.-% anionischer oder nicht-ionischer Emulgatoren oder eines Gemisches von beiden oder Schutzkolloiden, wobei sich die Mengenangaben auf den Festkörperanteil der Komponenten A) bis C) beziehen, sowie gegebenenfalls weiteren üblichen Zusätzen, wobei die Summe aller Komponenten stets 100 % ist.

2. Wäßrige Polymerisatdispersionen nach Anspruch 1, dadurch gekennzeichnet, daß die Säurezahl der Komponente A) 1 bis 200 beträgt.

3. Wäßrige Polymerisatdispersionen nach Anspruch 1 und/oder 2, dadurch gekennzeichnet, daß das Molekulargewicht ($M_W$) der Komponente A) zwischen 2.000 und 100.000 liegt.

4. Wäßrige Polymerisatdispersionen nach einem oder mehreren der Ansprüche 1 bis 3, dadurch gekennzeichnet, daß die Komponente A) erhalten wird durch Umsetzung von a) halogenfreien Polycarbonsäureeinheiten, b) salzbildenden Substanzen der Gruppe Alkali, Erdalkali und quartäre Ammoniumsalze, organische Basen und/oder Ammoniak, c1) OH-Gruppen enthaltenden Polymeren mit einer OH-Zahl von 20 bis 300 und c2) Epoxidverbindungen.

5. Verfahren zur Herstellung der wäßrigen Polymerisatdispersionen, gemäß einem oder mehreren der Ansprüche 1 bis 4, dadurch gekennzeichnet, daß man in einem wäßrigen System B) 1 bis 99 Gew.-% mindestens eines $\alpha,\beta$-olefinisch ungesättigten Monomeren in Gegenwart von A) 1 bis 99 Gew.-% eines carboxyfunktionellen Polymerisats, das zusätzlich Epoxygruppen enthält und von C) 0 bis 20 Gew.-% anionischer oder nicht-ionischer Emulgatoren oder eines Gemisches von beiden oder Schutzkolloiden, wobei sich die Mengenangaben auf den Festkörperanteil der Komponenten A) bis C) beziehen sowie in Gegenwart gegebenenfalls weiterer Zusätze, bei einer Temperatur zwischen 0 und 150 °C polymerisiert.

6. Verfahren nach Anspruch 5, dadurch gekennzeichnet, daß die Polymerisation bei einer Temperatur von 20 bis 100, insbesondere von 40 bis 90 °C durchgeführt wird.

7. Verfahren nach Anspruch 5 und/oder 6, dadurch gekennzeichnet, daß keine Emulgatoren und/oder Schutzkolloide eingesetzt werden.

8. Verfahren nach einem oder mehreren der Ansprüche 5 bis 7, dadurch gekennzeichnet, daß die Polymerisation in Gegenwart von 0,02 bis 5, insbesondere 0,05 bis 3 Gew.-% radikalbildendem Initiator erfolgt.

9. Ausführungsform nach einem oder mehreren der Ansprüche 1 bis 8, dadurch gekennzeichnet, daß die Komponenten A) und B) jeweils in Mengen von 5 bis 95 Gew.-% eingesetzt werden.

10. Ausführungsform nach einem oder mehreren der Ansprüche 1 bis 9, dadurch gekennzeichnet, daß 0,01 bis 20 Gew.-% bezogen auf die Gesamtmonomermenge B), an $\alpha,\beta$-ethylenisch, zwei- oder dreifach ungesättigten Monomeren eingesetzt werden.

11. Ausführungsform nach einem oder mehreren der Ansprüche 1 bis 10, dadurch gekennzeichnet, daß bis zu 100 Gew.-% mindestens einer Verbindung der Gruppe Methylmethacrylat und n-Butylacrylat, 0 bis 20 Gew.-% Hydroxyethylmethacrylat, 0 bis 20 Gew.-% Glycidylmethacrylat und 0 bis 20 Gew.-% Acryl- und/oder Methacrylsäure als Komponente B) enthalten ist, wobei die Summe stets 100 % der Monomeren ausmacht.

12. Ausführungsform nach Anspruch 11, dadurch gekennzeichnet, daß als Komponente B) 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% Acryl- und/oder Methacrylsäure eingesetzt werden.

13. Ausführungsform nach einem oder mehreren der Ansprüche 1 bis 12, dadurch gekennzeichnet, daß der Feststoffanteil der Polymerisatdispersion 5 bis 75 Gew.-%, vorzugsweise 10 bis 65 Gew.-% beträgt.

14. Verwendung der wäßrigen Polymerisatdispersionen nach einem oder mehreren der Ansprüche 1 bis 4 als Bindemittelkomponente zur Herstellung von bei Raumtemperatur oder bei erhöhter Temperatur härtenden Beschichtungssystemen.

15. Verwendung nach Anspruch 14, dadurch gekennzeichnet, daß es sich bei den Beschichtungssystemen um metallic Basislacke, metallfreie (uni) Basislacke, Reparaturlacke oder Elektrotauchlacke handelt.

**Patentansprüche für folgende Vertragsstaaten : AT, ES**

1. Verfahren zur Herstellung von wäßrigen Polymerisatdispersionen, dadurch gekennzeichnet, daß man in einem wäßrigen System B) 1 bis 99 Gew.-% mindestens eines $\alpha,\beta$-olefinisch ungesättigten Monomeren in Gegenwart von A) 1 bis 99 Gew.-% eines carboxyfunktionellen Polymerisats, das zusätzlich Epoxygruppen enthält und von C) 0 bis 20 Gew.-% anionischer oder nicht-ionischer Emulgatoren oder eines Gemisches von beiden oder Schutzkolloiden, wobei sich die Mengenangaben auf den Festkörperanteil der Komponenten A) bis C) beziehen, sowie in Gegenwart gegebenenfalls weiterer Zusätze, bei einer Temperatur zwischen 0 und 150 °C polymerisiert.

2. Verfahren nach Anspruch 1, dadurch gekennzeichnet, daß die Polymerisation bei einer Temperatur von 20 bis 100, insbesondere von 40 bis 90 °C durchgeführt wird.

3. Verfahren nach Anspruch 1 und/oder 2, dadurch gekennzeichnet, daß keine Emulgatoren und/oder Schutzkolloiden eingesetzt werden.

4. Verfahren nach einem oder mehreren der Ansprüche 1 bis 3, dadurch gekennzeichnet, daß die Polymerisation in Gegenwart von 0,02 bis 5, insbesondere 0,05 bis 3 Gew.-% radikalbildendem Initiator erfolgt.

5. Verfahren nach einem oder mehreren der Ansprüche 1 bis 4, dadurch gekennzeichnet, daß die Komponenten A) und B) jeweils in Mengen von 5 bis 95 Gew.-% eingesetzt werden.

6. Verfahren nach einem oder mehreren der Ansprüche 1 bis 5, dadurch gekennzeichnet, daß 0,01 bis 20 Gew.-%, bezogen auf die Gesamtmonomermenge B), an $\alpha,\beta$-ethylenisch, maximal 3-fach ungesättigten Monomeren eingesetzt werden.

7. Verfahren nach einem oder mehreren der Ansprüche 1 bis 6, dadurch gekennzeichnet, daß bis zu 100 Gew.-% mindestens einer Verbindung der Gruppe Methylmethacrylat und n-Butylacrylat, 0 bis 20 Gew.-% Hydroxyethylmethacrylat, 0 bis 20 Gew.-% Glycidylmethacrylat und 0 bis 20 Gew.-% Acryl- und/oder Methacrylsäure als Komponente B) eingesetzt werden, wobei die Summe stets 100% der Monomeren ausmacht.

8. Verfahren nach Anspruch 7, dadurch gekennzeichnet, daß als Komponente B) 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% Acryl- und/oder Methacrylsäure eingesetzt werden.

9. Verfahren nach einem oder mehreren der Ansprüche 1 bis 8, dadurch gekennzeichnet, daß der Feststoffanteil der Polymerisatdispersion 5 bis 75 Gew.-%, vorzugsweise 10 bis 65 Gew.-% beträgt.

10. Verwendung der wäßrigen Polymerisatdispersionen erhältlich nach einem oder mehreren der Ansprüche 1 bis 9 als Bindemittelkomponente zur Herstellung von bei Raumtemperatur oder bei erhöhter Temperatur härtenden Beschichtungssystemen.

11. Verwendung nach Anspruch 10, dadurch gekennzeichnet, daß es sich bei den Beschichtungssystemen um metallic Basislacke, metallfreie Basislacke, Reparaturlacke oder Elektrotauchlacke handelt.

## Claims

### Claims for the following Contracting States : BE, CH, DE, FR, GB, IT, LI, NL, SE

1. Aqueous polymer dispersions based on A) 1 to 99% by weight of a carboxy-functional polymer which additionally contains epoxy groups, B) 1 to 99% by weight of a polymer obtained from at least one $\alpha,\beta$-olefinically unsaturated monomer, the polymer B) having been prepared in the presence of polymer A), C) 0 to 20% by weight of anionic or non-ionic emulsifiers or a mixture of the two or protective colloids, the quantity data relating to the solids content of components A) to C), and if appropriate further conventional additives, the sum of all the components always being 100%.

2. Aqueous polymer dispersions as claimed in claim 1, wherein the acid number of component A) is 1 to 200.

3. Aqueous polymer dispersions as claimed in claim 1 and/or 2, wherein the molecular weight ($M_w$) of component A) is between 2,000 and 100,000.

4. Aqueous polymer dispersions as claimed in one or more of claims 1 to 3, wherein the component A) is obtained by reacting a) halogen-free polycarboxylic acid units, b) salt-forming substances from the group comprising alkali, alkaline earth and quaternary ammonium salts, organic bases and/or ammonia, c1) polymers containing OH groups and having an OH number from 20 to 300 and c2) epoxide compounds.

5. A process for the preparations of the aqueous polymer dispersions as claimed in one or more of claims 1 to 4, which comprises polymerizing, in an aqueous system at a temperature between 0 and 150 °C, B) 1 to 99% by weight of at least one $\alpha,\beta$-olefinically unsaturated monomer in the presence of A) 1 to 99% by weight of a carboxy-functional polymer which additionally contains epoxy groups and of C) 0 to 20% by weight of anionic or non-ionic emulsifiers or a mixture of the two or protective colloids, the quantity data relating to the solids content of components A) to C), and if appropriate in the presence of further additives.

6. The process as claimed in claim 5, wherein the polymerization is carried out at a temperature from 20 to 100°C, in particular from 40 to 90°C.

7. The process as claimed in claim 5 and/or 6, wherein no emulsifiers and/or protective colloids are employed.

8. The process as claimed in one or more of claims 5 to 7, wherein the polymerization is carried out in the presence of 0.02 to 5% by weight, in particular 0.05 to 3% by weight, of an initiator which forms free radicals.

9. An embodiment as claimed in one or more of claims 1 to 8, wherein the components A) and B) are each employed in quantities of 5 to 95% by weight.

10. An embodiment as claimed in one or more of claims 1 to 9, wherein 0.01 to 20% by weight, relative to the total quantity of monomers B), of $\alpha,\beta$-ethylenically diunsaturated or triunsaturated monomers are employed.

11. An embodiment as claimed in one or more of claims 1 to 10, wherein up to 100% by weight of at least one compound from the group comprising methyl methacrylate and n-butyl acrylate, 0 to 20% by weight of hydroxyethyl methacrylate, 0 to 20% by weight of glycidyl methacrylate and 0 to 20% by weight of acrylic and/or methacrylic acid are present as the component B), the sum always being 100% of the monomers.

12. An embodiment as claimed in claim 11, wherein 15 to 80% by weight of methyl methacrylate, 15 to 50% by weight of n-butyl acrylate, 0 to 15% by weight of hydroxyethyl methacrylate, 0 to 15% by weight of glycidyl methacrylate and 0 to 5% by weight of acrylic and/or methacrylic acid are employed as the component B).

13. An embodiment as claimed in one or more of claims 1 to 12, wherein the solids content of the polymer dispersion is 5 to 75% by weight, preferably 10 to 65% by weight.

14. The use of the aqueous polymer dispersions as claimed in one or more of claims 1 to 4 as a binder component for producing coating systems which cure at room temperature or elevated temperature.

15. The use as claimed in claim 14, wherein the coating systems are metallic basecoats, metal-free(uni)-basecoats, refinishing paints or electrocoatings.

**Claims for the following Contracting States : AT, ES**

1. A process for the preparation of the aqueous polymer dispersion as claimed in one or more of claims 1 to 4, which comprises polymerizing, in an aqueous system at a temperature between 0 and 150°C, B) 1 to 99% by weight of at least one $\alpha,\beta$-olefinically unsaturated monomer in the presence of A) 1 to 99% by weight of a carboxy-functional polymer which additionally contains epoxy groups and of C) 0 to 20% by weight of anionic or non-ionic emulsifiers or a mixture of the two or protective colloids, the quantity data relating to the solids content of components A) to C), and if appropriate in the presence of further additives.

2. The process as claimed in claim 1 wherein the polymerization is carried out at a temperature from 20 to 100°C, in particular from 40 to 90°C.

3. The process as claimed in claim 1 and/or 2 , wherein no emulsifiers and/or protective colloids are employed.

4. The process as claimed in one or more of claims 1 to 3, wherein the polymerization is carried out in the presence of 0.02 to 5% by weight, in particular 0.05 to 3% by weight, of an initiator which forms free radicals.

5. The process as claimed in one or more of claims 1 to 4, wherein the components A) and B) are each employed in quantities of 5 to 95% by weight.

6. The process as claimed in one or more of claims 1 to 5, wherein 0.01 to 20% by weight, relative to the total quantity of monomers B), of $\alpha,\beta$-ethylenically, maximally triunsaturated monomers are employed.

7. The process as claimed in one or more of claims 1 to 6, wherein up to 100% by weight of at least one compound from the group comprising methyl methacrylate and n-butyl acrylate, 0 to 20% by weight of hydroxyethyl methacrylate, 0 to 20% by weight of glycidyl methacrylate and 0 to 20% by weight of acrylic and/or methacrylic acid are present as the component B), the sum always being 100% of the monomers.

8. The process as claimed in claim 7, wherein 15 to 80% by weight of methyl methacrylate, 15 to 50% by weight of n-butyl acrylate, 0 to 15% by weight of hydroxyethyl methacrylate, 0 to 15% by weight of glycidyl methacrylate and 0 to 5% by weight of acrylic and/or methacrylic acid are employed as the component B).

9. The process as claimed in one or more of claims 1 to 8, wherein the solids content of the polymer dispersion is 5 to 75% by weight, preferably 10 to 65% by weight.

10. The use of the aqueous polymer dispersions prepare as claimed in one or more of claims 1 to 9 as a binder component for producing coating systems which cure at room temperature or elevated temperature.

11. The use as claimed in claim 10, wherein the coating systems are metallic basecoats, metal-free basecoats, refinishing paints or electrocoatings.

**Revendications**

**Revendications pour les Etats contractants suivants : BE, CH, DE, FR, GB, IT, LI, NL, SE.**

1. Dispersions aqueuses de polymères à base de A) 1 à 99 % en poids d'un polymère contenant des groupes carboxyles fonctionnels, qui contient en outre des groupes époxydes, (B) 1 à 99 % d'un polymère d'au moins un monomère à insaturation oléfinique en $\alpha$-$\beta$, le polymère (B) ayant été préparé en présence du polymère (A), (C) 0 à 20 % en poids d'émulsifiants anioniques ou non ioniques ou d'un mélange des deux ou de colloïdes protecteurs, les données des quantités se rapportant à la partie solide des composants (A) à (C), la dispersion contenant éventuellement d'autres additifs usuels, la somme de tous les composants formant à chaque fois 100 %.

2. Dispersions aqueuses de polymères selon la revendication 1, caractérisées en ce que l'indice d'acide du composant (A) vaut de 1 à 200.

3. Dispersions aqueuses de polymères selon la revendication 1 et/ou 2, caractérisées en ce que le poids moléculaire ($\overline{M}_P$) du composant (A) se situe entre 2 000 et 100 000.

4. Dispersions aqueuses de polymères selon une ou plusieurs des revendications 1 à 3, caractérisées en ce que le composant (A) est obtenu par réaction de (a) des motifs acides polycarboxyliques sans halogène, (B) des substances formatrices de sels, de l'ensemble formé par des sels alcalins, des sels alcalino terreux et des sels d'ammonium quaternaire, des bases organiques et/ou de l'ammoniaque, C1) des polymères contenant des groupes OH et ayant un indice de OH de 20 à 300 et c2) des époxydes .

5. Procédé pour préparer des dispersions aqueuses de polymères, selon une ou plusieurs des revendications 1 à 4 , procédé caractérisé en ce qu'on effectue la polymérisation à une température comprise entre 0 et 150 °C, dans un système aqueux de (B) 1 à 99 % en poids d'au moins un monomère à insaturation éthylénique en $\alpha$-$\beta$, en présence de (A) 1 à 99 % en poids d'un polymère contenant des groupes carboxyles fonctionnels, qui contient en outre des groupes époxydes, et de C) 0 à 20 % en

poids d'émulsifiants anioniques ou non ioniques ou d'un mélange des deux ou de colloïdes protecteurs, les quantités indiquées se rapportant à la partie solide des composants (A) à (C), ainsi qu'en présence éventuellement d'autres additifs.

**6.** Procédé selon la revendication 5, caractérisé en ce qu'on conduit la polymérisation à une température de 20 à 100, notamment de 40 à 90° C.

**7.** Procédé selon la revendication 5 et/ou 6, caractérisé en ce qu'on n'utilise pas d'émulsifiant ni/ou de colloïdes protecteurs.

**8.** Procédé selon une ou plusieurs des revendications 5 à 7, caractérisé en ce que la polymérisation a lieu en présence de 0,02 à 5 , notamment 0,05 à 3 % en poids d'un amorceur formateur de radicaux libres.

**9.** Forme de réalisation selon une ou plusieurs des revendications 1 à 8 , caractérisée en ce qu'on utilise les composants (A) et (B) à chaque fois en des quantités de 5 à 95 % en poids.

**10.** Forme de réalisation selon une ou plusieurs des revendications 1 à 8 , caractérisée en ce qu'on utilise 0,01 à 20 % en poids, par rapport à la quantité totale de monomères (B), de monomères comportant deux ou trois insaturations éthyléniques en $\alpha$-$\beta$.

**11.** Forme de réalisation selon une ou plusieurs des revendications 1 à 10, caractérisée en ce qu'elle comporte jusqu'à 100 % en poids d'au moins un composé de l'ensemble formé par le méthacrylate de méthyle et l'acrylate de butyle, 0 à 20 % en poids de méthacrylate d'hydroxyéthyle, 0 à 20 % en poids de méthacrylate de glycidyle et 0 à 20 % en poids d'acide acryliques et/ou méthacrylique comme composant (B) , la somme de ces composants formant toujours 100 % des monomères.

**12.** Forme de réalisation selon la revendication 11, caractérisée en ce qu'on utilise comme composant (B) 15 à 80 % en poids de méthacrylate de méthyle, 15 à 50 % en poids d'acrylate de n-butyle, 0 à 15 % en poids de méthacrylate d'hydroxyéthyle, 0 à 15 % en poids de méthacrylate de glycidyle, et 0 à 5 % en poids d'acide acrylique et/ou d'acide méthacrylique.

**13.** Forme de réalisation selon une ou plusieurs des revendications 1 à 12, caractérisée en ce que la proportion de matière sèche ou solide dans la dispersion de polymères représente 5 à 75 % en poids, avantageusement 10 à 65% en poids.

**14.** Utilisation des dispersions aqueuses de polymères selon une ou plusieurs des revendications 1 à 4 comme liants pour préparer des systèmes pour revêtements pouvant durcir à la température ambiante ou à température élevée.

**15.** Utilisation selon la revendication 14,caractérisée en ce qu'il s'agit, pour les systèmes de revêtement, de laques ou vernis de base pour peinture métallisée, de laques ou vernis de base (unies) sans métal, de laques ou vernis pour réparation ou de laques ou vernis pour électro-déposition au trempé.

**Revendications pour les Etats contractants suivants : AT, ES**

**1.** Procédé pour préparer des dispersions aqueuses de polymères, caractérisé en ce qu'on conduit la polymérisation à une température comprise entre 0 et 150 ° C, dans un système aqueux, de (B) 1 à 99 % en poids d'au moins un monomère à insaturation oléfinique en $\alpha$-$\beta$, en présence de (A) 1 à 99 % en poids d'un polymère contenant des groupes carboxyles fonctionnels, qui contient en outre des groupes époxydes, et de C) 0 à 20 % en poids d'émulsifiants anioniques ou non ioniques ou d'un mélange des deux ou de colloïdes protecteurs, les indications de quantité se rapportant à la partie sèche ou solide des composants (A) à C), en opérant éventuellement en présence d'autres additifs.

**2.** Procédé selon la revendication 1, caractérisé en ce qu'on conduit la polymérisation à une température de 20 à 100, notamment de 40 à 90° C.

**3.** Procédé selon la revendication 1 ou 2 caractérisé en ce qu'on n'utilise pas d'émulsifiants ni/ou de colloïdes protecteurs.

**4.** Procédé selon une ou plusieurs des revendications 1 à 3, caractérisé en ce que la polymérisation a lieu en présence de 0,02 à 5 , notamment de 0,05 à 3, % en poids d'un amorceur formateur de radicaux libres.

**5.** Procédé selon une ou plusieurs des revendications 1 à 4, caractérisé en ce qu'on utilise les composants (A) et (B) chacun en des quantités de 5 à 95 % en poids.

**6.** Procédé selon une ou plusieurs des revendications 1 à 5, caractérisé en ce qu'on utilise 0,01 à 20 % en poids , sur la base de la quantité totale des monomères(B), de monomères à insaturation(s) éthylénique(s) en $\alpha$-$\beta$, présentant au maximum 3 insaturations.

**7.** Procédé selon une ou plusieurs des revendications 1 à 6, caractérisé en ce qu'on utilise jusqu'à 100 % en poids d'au moins un composé de l'ensemble formé par le méthacrylate de méthyle et l'acrylate de butyle, 0 à 20 % en poids de méthacrylate d'hydroxyéthyle, 0 à 20 % en poids de méthacrylate de glycidyle, et 0 à 20 % en poids d'acide acrylique et/ou méthacrylique comme composant (B), la somme de ces composants formant toujours 100 % des monomères.

**8.** Procédé selon la revendication 7, caractérisé en ce qu'on utilise comme composant (B) 15 à 80 % en poids de méthacrylate de méthyle, 15 à 50 % en poids d'acrylate de butyle, 0 à 15 % en poids de méthacrylate d'hydroxyéthyle, 0 à 15 % en poids de méthacrylate de glycidyle et 0 à 5% d'acide acrylique et/ou méthacrylique.

**9.** Procédé selon une ou plusieurs des revendications 1 à 8 caractérisé en ce que la proportion de matière sèche ou des solides de la dispersion de polymères représente 5 à 75 % , avantageusement 10 à 65 % en poids.

**10.** Utilisation des dispersions aqueuses de polymères que l'on peut obtenir selon une ou plusieurs des revendications 1 à 9, comme liant pour préparer des systèmes de revêtement pouvant durcir à la température ambiante ou à température élevée.

**11.** Utilisation selon la revendication 10 , caractérisée en ce qu'il s'agit, pour les systèmes de revêtement, de laques ou vernis de base pour peinture métallisée, de laques ou vernis de base sans métal, de laques ou vernis pour réparation ou de laques ou vernis pour application par électrodéposition au trempé.

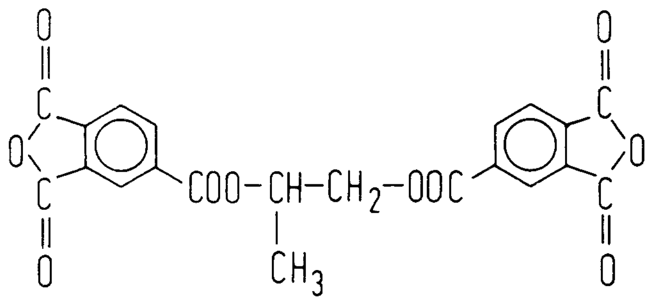

(I)

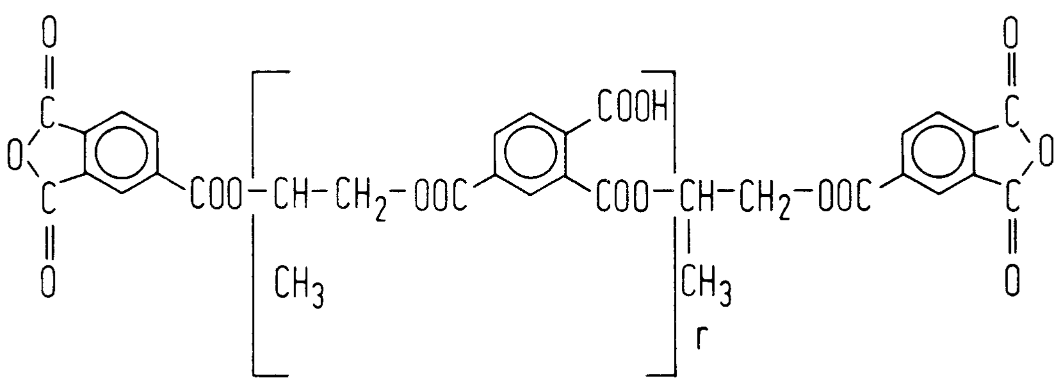

r = 1–8

(II)